# EUROPÄISCHE PATENTSCHRIFT

(11) **EP 0 535 257 B1**
(45) Veröffentlichungstag und Bekanntmachung des Hinweises auf die Patenterteilung: **19.07.1995**
(21) Anmeldenummer: 91115311.2
(22) Anmeldetag: 10.09.1991
(51) Int. Cl.: G01F 1/58, G01F 1/00

(54) **Vorrichtung zur Messung des Stroms einer entlang einer Freispiegelleitung fliessenden Flüssigkeit**
Flowmeter for measuring the flowrate of a liquid with a free surface along a duct
Débitmètre pour la mesure d'un écoulement d'un liquide de surface libre dans un canal

(43) Veröffentlichungstag der Anmeldung: 07.04.1993
(73) Patentinhaber: Fischer & Porter GmbH, D-37079 Göttingen (DE)
(72) Erfinder: Kiene, Wilfried, W-3510 Münden (DE); Nissen, Peter, Dr., W-3405 Rosdorf (DE)
(74) Vertreter: Fincke, Karl Theodor, Dipl.-Phys. Dr.

(56) Entgegenhaltungen:
- DE-A- 1 498 319
- DE-A- 2 063 792
- DE-A- 2 856 240
- DE-U- 9 103 046
- FR-A- 2 240 437

## Beschreibung

Die Erfindung betrifft eine Vorrichtung zur Messung des Stroms einer entlang einer Freispiegelleitung, wie eines offenen Kanals oder einer Rinne, fließenden Flüssigkeit mit über der Freispiegelleitung und unterhalb eines Bodenbereichs der Freispiegelleitung angeordneten Spulen zur Erzeugung eines die Freispiegelleitung im wesentlichen vertikal durchsetzenden Magnetfelds, mit in einander gegenüberstehenden Wandbereichen der Freispiegelleitung angeordneten Elektroden, mit einer Erregungsschaltung für die Spulen und mit einer Auswerteschaltung zur Erfassung von an den Elektroden durch das Magnetfeld und den Strom der Flüssigkeit auftretenden elektrischen Potentialdifferenzen, die ein dem Strom der Flüssigkeit entsprechendes Signal erzeugt.

Bei einer nach der EP-A-0 309 932 bekannten Vorrichtung zur Messung des Stroms einer durch ein Meßrohr fließenden Flüssigkeit ist eine Magnetfeldrückführung vorgesehen, die im Querschnitt rechteckig ist und das Meßrohr mit Abstand umschließt. An einander gegenüberliegenden Seiten der Magnetfeldrückführung sind Spulen angeordnet, die an die Magnetfeldrückführung angesetzte Kerne umschließen. Die Kerne erstrecken sich bis zueinander gegenüberliegenden Seiten des Meßrohrs und berühren diese Seiten. Das Meßrohr hat einen kreisrunden Querschnitt, kann aber auch einen ellipsenförmigen (ovalen) Querschnitt aufweisen. Das Meßrohr weist einen metallischen Außenmantel auf, der zur elektrischen Isolation gegenüber einer elektrisch leitenden Flüssigkeit, die das Meßrohr durchfließt, mit einer Innenauskleidung aus Isoliermaterial, beispielsweise Kunststoff, versehen ist. Das Isolationsmaterial ist so gewählt, daß seine temperaturbedingte Ausdehnung in einem solchen Verhältnis zu der temperaturbedingten Ausdehnung des metallischen Außenmantels steht, daß die Innenauskleidung stets und überall an der Innenwand des metallischen Außenmantels anliegt. Die Innenfläche der Innenauskleidung begrenzt den Hohlraum des Meßrohrs.

Aus der DE-A-2 856 240 ist eine Vorrichtung der eingangs genannten Art bekannt, bei der oberhalb und unterhalb einer Freispiegelleitung in Abstand von der Freispiegelleitung je eine Spule vorgesehen ist. Diese Spulen sind in einer nicht näher beschriebenen Weise gehaltert.

Bei einer nach der DE-OS 20 63 792 bekannten Vorrichtung sind beidseitig über den Rändern einer Freispiegelleitung Spulen mit horizontaler Achse angeordnet, die, wenn sie gegenseitig erregt werden, ein im wesentlichen vertikales Magnetfeld im Mittelbereich der Freispiegelleitung erzeugen. Eine solche Vorrichtung ist nicht nur wegen der über beiden Rändern der Freispiegelleitung angeordneten Spulen aufwendig, sondern gestattet auch nicht, eine Feldverteilung in der Freispiegelleitung zu erzeugen, die zu einem hinreichend starken, gut auswertbaren, dem Strom der Flüssigkeit entsprechenden Signal führt.

Aufgabe der Erfindung ist es, eine Vorrichtung eingangs genannter Art anzugeben, die mit geringerem Aufwand gebaut werden kann und zu einem besseren, dem Strom der Flüssigkeit entsprechenden Signal führt.

Zur Lösung dieser Aufgabe ist die Vorrichtung dadurch gekennzeichnet, daß die Freispiegelleitung von einer Magnetfeldrückführung dienenden magnetischen Körpern umschlossen ist, die an der Außenseite der Freispiegelleitung anliegen und die Freispiegelleitung in Form einer Brücke überspannen, daß sich die über der Freispiegelleitung angeordnete Spule in einem Mittelbereich der Brücke befindet und daß sich die unterhalb des Bodenbereichs der Freispiegelleitung angeordnete Spule in einem Bodenbereich der magnetischen Körper befindet.

Da die Magnetfeldrückführung an der Außenseite der Freispiegelleitung anliegt und die Freispiegelleitung in Form einer Brücke überspannt, ist die Vorrichtung besonders kompakt und führt zu einem besonders guten, dem Strom der Flüssigkeit entsprechenden Signal.

Die Vorrichtung hat sich besonders bewährt, wenn der Querschnitt der Freispiegelleitung rechteckig, oval mit vertikaler Hauptachse oder eiförmig mit nach unten gerichteter Eispitze ist.

Um die Freispiegelleitung der Vorrichtung günstig anzupassen, ist bevorzugt die Freispiegelleitung im Bereich der unteren Spulen und der Elektroden durch ein innenseitig mit einer elektrisch isolierenden Schicht versehenes Profilstück aus einem magnetisch leitenden Werkstoff gebildet, in das die Elektroden eingebaut sind.

Die Erfindung wird im folgenden an einem Ausführungsbeispiel unter Hinweis auf die beigefügten Zeichnungen beschrieben.

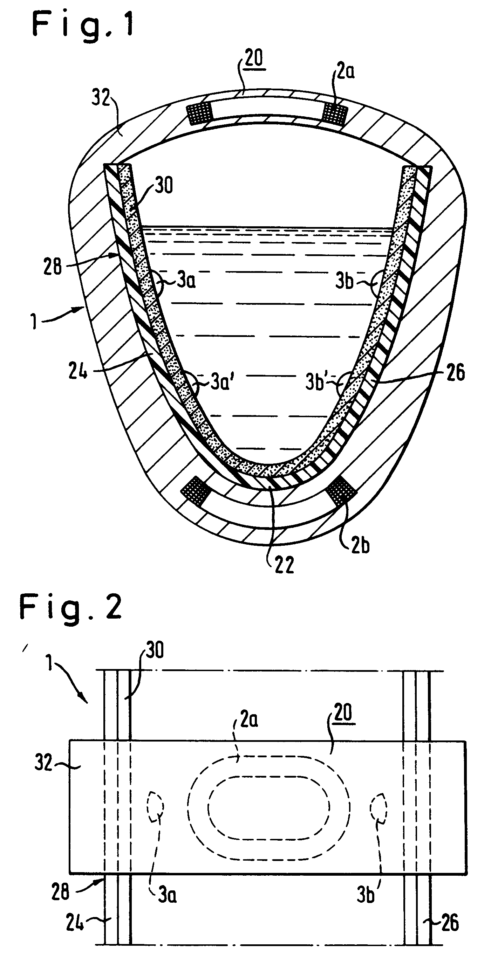

- Fig. 1: zeigt einen Querschnitt durch eine Freispiegelleitung mit einer Brücke.
- Fig. 2: zeigt eine Aufsicht auf den Abschnitt der Freispiegelleitung gemäß Fig. 1.
- Fig. 3: zeigt eine Schaltungsanordnung für die Vorrichtung.

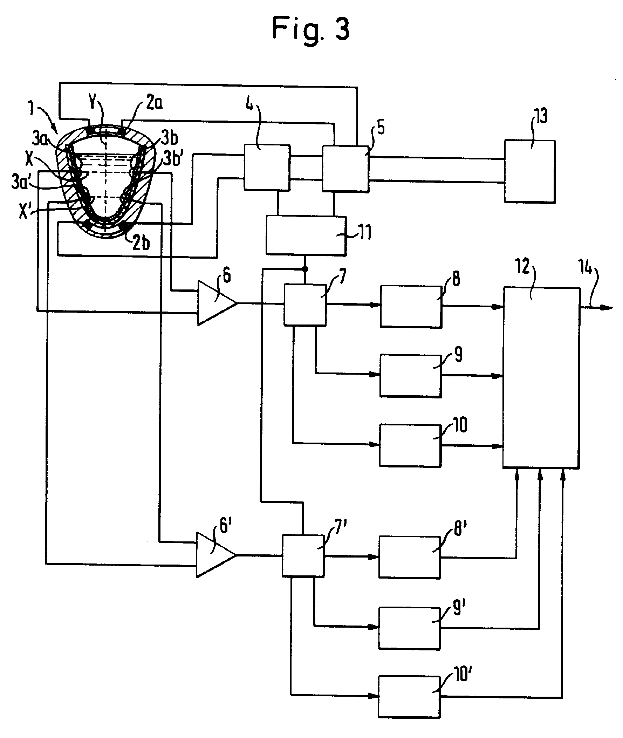

Die Vorrichtung nach dem Ausführungsbeispiel dient zur Messung des Stroms entlang einer Freispiegelleitung 1. Der Querschnitt der Freispiegelleitung 1 ist eiförmig mit nach unten gerichteter Eispitze, so daß er auch, wenn der Strom verhältnismäßig gering ist, bis zu einem faßbaren Pegel mit Flüssigkeit gefüllt ist. An einer Brücke 20 über der Freispiegelleitung 1 und unterhalb eines Bodenbereichs 22 der Freispiegelleitung 1 sind Spulen 2a, 2b zur Erzeugung eines im wesentlichen vertikalen Magnetfelds angeordnet. In einander gegenüberstehenden Wandbereichen 24, 26 der Freispiegelleitung 1 sind übereinander zwei Paare von Elektroden 3a, 3b; 3a′, 3b′ angeordnet. Für die Spulen 2a, 2b ist eine in Zusammenhang mit Fig. 3 näher beschriebene Erregungsschaltung 4, 5 vorgesehen. Mit dieser Erregungschaltung 4, 5, wirkt eine in Zusammenhang mit Fig. 3 näher beschriebene Auswerteschaltung zusammen, die an den Elektroden 3a, 3b; 3a′, 3b′ durch das Magnetfeld und den Strom der Flüssigkeit auftretende Potentialdifferenzen erfaßt und ein dem Strom der Flüssigkeit entsprechendes Signal erzeugt.

Die Freispiegelleitung 1 ist im Bereich der Spulen 2a, 2b und der Elektroden 3a, 3b; 3a′, 3b′ durch ein Profilstück 28 aus einem magnetisch nicht leitenden Werkstoff, wie Kunststoff oder Beton, gebildet, das innenseitig mit einer elektrisch isolierenden Schicht 30 versehen ist. Die Elektroden 3a, 3b; 3a′, 3b′ befinden sich auf der Innenseite der elektrisch isolierenden Schicht 30 und weisen Zuführungen auf, die die elektrisch isolierende Schicht 30 und das Profilstück 28 durchsetzen.

Zwischen den Spulen 2a, 2b und um die Spulen 2a, 2b herum verlaufen um beide Seiten der Freispiegelleitung 1 magnetisch leitende Körper 32 zur Magnetfeldrückführung.

Fig. 3 zeigt eine Freispiegelleitung 1 und zwei Spulen 2a, 2b zur Erzeugung eines die Freispiegelleitung 1 im wesentlichen symmetrisch vertikal durchsetzenden Magnetfelds. Zwei von Ladungsverschiebungen in einer entlang der Freispiegelleitung 1 strömenden Flüssigkeit beeinflußte Elektroden 3a, 3b liegen derart, daß ihre mittlere Verbindungslinie X den Strom im wesentlichen diametral zur Freispiegelleitung 1 und im wesentlichen rechtwinklig zur mittleren Verbindungslinie Y zwischen den Spulen 2a, 2b durchsetzt. Die Spulen 2a, 2b sind über Ab- und Umpolschalter 4, 5 mit einem Versorgungsgerät 13 verbunden. Bei entsprechender Änderung der Schaltung können die Spulen 2a, 2b auch hintereinander geschaltet sein, und es kann zur Änderung der Erregung der Spule 2a oder der Spule 2b jeweils eine Zusatzwicklung auf der Spule 2a bzw. 2b vorgesehen sein, die eine zur Erregung der Hauptwicklung gegenpolige Erregung hervorruft. Die Elektroden 3a, 3b sind mit einem Signalverstärker 6 verbunden, dessen Ausgang an eine Signalweiche 7 angeschlossen ist. Ein Taktgeber 11 schaltet synchron die Umpolschalter/Abschalter 4, 5 zu Ausgangskanälen der Signalweiche 7, die z.B. zu einem Signalspeicher 8 bei gleichsinniger Polung der Elektromagneten 2a, 2b, zu einem Signalspeicher 9 bei gegensinniger Polung der Elektromagneten 2a, 2b und zu einem Signalspeicher 10 bei abgeschaltetem Elektromagneten 2b führen. Die in den Signalspeichern8, 9 und 10 gespeicherten Signale werden in einer Korrekturschaltung 12 mittels empirischer Parameter verarbeitet, so daß am Ausgang 14 der Korrekturschaltung 12 ein Signal auftritt, das im wesentlichen von Störungen des Strömungsprofils in der Freispiegelleitung 1, insbesondere von Abweichungen des Strömungsprofils von der Rotationssymmetrie, frei ist.

Unterhalb der Elektroden 3a, 3b sind zwei weitere von Ladungsverschiebungen in der Flüssigkeit beeinflußte Elektroden 3a′ und 3b′ angeordnet, deren mittlere Verbindungslinie X′ den Strom im wesentlichen quer zur Freispiegelleitung 1 und im wesentlichen rechtwinklig zur mittleren Verbindungslinie Y zwischen den Spulen 2a, 2b durchsetzt. Der Taktgeber 11 schaltet überdies eine zweite Weiche 7′, die die von den zweiten Elektroden 3a′, 3b′ über einen Signalverstärker 6′ abgenommenen Meßspannungen in zweite Speicher 8′, 9′, 10′ leitet, die den Speichern 8, 9, 10 entsprechen, also unterschiedlichen Schaltzuständen der Spule 2b. Die Ausgänge auch der Speicher 8′, 9′, 10′ sind an die Korrekturschaltung 12 zur Erzeugung des Ausgangssignals am Ausgang 14 auch aus den in diesen Speichern 8′, 9′, 10′ gespeicherten Signalen mittels empirischer Parameter angeschlossen.

Bei der Ausführungsform nach Fig. 3 ist den beiden Weichen 7, 7′ ein gemeinsames Paar von Elektromagneten 2a, 2b zugeordnet.

Aus den von den Elektroden 3a, 3b und 3a′ und 3b′ und gegebenenfalls weiteren Elektroden abgegebenen Spannungen läßt sich der Füllstand in der Freispiegelleitung 1 ermitteln.

Die Funktionen der beschriebenen Schaltung sind in dem Deutsches Gebrauchsmuster 91 03 046 erläutert.

## Patentansprüche

1. Vorrichtung zur Messung des Stroms einer entlang einer Freispiegelleitung (1), wie eines offenen Kanals oder einer Rinne, fließenden Flüssigkeit mit über der Freispiegelleitung (1) und unterhalb eines Bodenbereichs (22) der Freispiegelleitung (1) angeordneten Spulen (2a, 2b) zur Erzeugung eines die Freispiegelleitung (1) im wesentlichen vertikal durchsetzenden Magnetfelds, mit in einander gegenüberstehenden Wandbereichen (24, 26) der Freispiegelleitung (1) angeordneten Elektroden (3a, 3b; 3a′, 3b′), mit einer Erregungsschaltung (4, 5) für die Spulen (2a, 2b) und mit einer Auswerteschaltung zur Erfassung von an den Elektroden (3a, 3b; 3a′, 3b′) durch das Magnetfeld und den Strom der Flüssigkeit auftretenden elektrischen Potentialdifferenzen, die ein dem Strom der Flüssigkeit entsprechendes Signal erzeugt,
dadurch gekennzeichnet,
daß die Freispiegelleitung (1) von einer Magnetfeldrückführung dienenden magnetischen Körpern (32) umschlossen ist, die an der Außenseite der Freispiegelleitung (1) anliegen und die Freispiegelleitung (1) in Form einer Brücke (20) überspannen, daß sich die über der Freispiegelleitung (1) angeordnete Spule (2a) in einem Mittelbereich der Brücke (20) befindet und daß sich die unterhalb des Bodenbereichs (22) der Freispiegelleitung (1) angeordnete Spule (2b) in einem Bodenbereich der magnetischen Körper (32) befindet.

2. Vorrichtung nach Anspruch 1, dadurch gekennzeichnet, daß der Querschnitt der Freispiegelleitung (1) rechteckig, oval mit vertikaler Hauptachse oder eiförmig mit nach unten gerichteter Eispitze ist.

3. Vorrichtung nach Anspruch 1 oder 2, dadurch gekennzeichnet, daß die Freispiegelleitung (1) im Bereich der unteren Spulen (2b) und der Elektroden (3a, 3b; 3a′, 3b′) durch ein innenseitig mit einer elektrisch isolierenden Schicht (30) versehenes Profilstück (28) aus einem magnetisch nicht leitenden Werkstoff gebildet ist, in das die Elektroden (3a, 3b; 3a′, 3b′) eingebaut sind.

## Claims

1. An apparatus for measuring the flow of a fluid flowing along a nonpressure duct (1) such as an open channel or a groove, comprising coils (2a, 2b) arranged above the nonpressure duct (1) and underneath a bottom region (22) of the nonpressure duct (1) for producing a magnetic field which passes through the nonpressure duct (1) substantially vertically, comprising electrodes (3a, 3b; 3a′, 3b′), arranged in facing wall regions (24, 26) of the nonpressure duct (1), comprising an excitation circuit (4, 5) for the coils (2a, 2b) and comprising an evaluating circuit for detecting electric potential differences occurring on the electrodes (3a, 3b; 3a′, 3b′) due to the magnetic field and the flow of the fluid, which produces a signal corresponding to the flow of the fluid, characterised in that the nonpressure duct (1) is surrounded by magnetic members (32) serving to restore the magnetic field, which rest against the outside of the nonpressure duct (1) and stretch over the nonpressure duct (1) in the form of a bridge (20), in that the coil (2a) arranged above the nonpressure duct (1) is positioned in a central region of the bridge (20) and that the coil (2b) arranged underneath the bottom region of the nonpressure duct (1) is positioned in a bottom region of the magnetic members (32).

2. A device according to claim 1, characterised in that the cross-section of the nonpressure duct (1) is rectangular, oval with a vertical main axis or ovoid with a downwardly oriented egg-shaped point.

3. A device according to claim 1 or 2, characterised in that the nonpressure duct (1) is formed in the region of the lower coils (2b) and the electrodes (3a, 3b; 3a′, 3b′) by a profiled piece (28) which is provided with an electrically insulating layer (30) and made of a magnetically non-conductive material into which the electrodes (3a, 3b; 3a′, 3b′) are inserted.

## Revendications

1. Dispositif pour la mesure du débit d'un liquide s'écoulant le long d'une conduite à niveau libre (1) telle qu'un canal ouvert ou une rigole, comprenant des bobines (2a, 2b) au-dessus de la conduite à niveau libre (1) et au-dessous d'une zone de fond (22) de la conduite à niveau libre (1) pour produire un champ magnétique traversant sensiblement verticalement la conduite à niveau libre (1), avec des électrodes (3a, 3b; 3a′, 3b′) disposées dans des zones de paroi (24, 26) situées face à face de la conduite à niveau libre (1), un circuit d'excitation (4, 5) des bobines (2a, 3b) et un circuit d'évaluation pour détecter les différences de potentiel électrique qui apparaissent aux bornes des électrodes (3a, 3b; 3a′, 3b′) du fait du champ magnétique et du courant du liquide, circuit qui produit un signal correspondant au débit du liquide,
caractérisé en ce que
la conduite à niveau libre (1) est entourée par des corps magnétiques (32) servant au retour du champ magnétique, qui sont disposés sur le côté externe de la conduite à niveau libre (1) et recouvrent la conduite à niveau libre (1) sous forme d'un pont (20), en ce que la bobine (2a) qui est disposée au-dessus de la conduite à niveau libre (1) se trouve dans la partie centrale du pont (20) et la bobine (2b) disposée au-dessous de la zone de fond (22) de la conduite à niveau libre (1) se trouve dans une zone de fond des corps magnétiques (32).

2. Dispositif selon la revendication 1, caractérisé en ce que la section transversale de la conduite à niveau libre (1) est rectangulaire, ovale avec un axe principal vertical ou en forme d'oeuf dont la pointe est dirigée vers le bas.

3. Dispositif selon la revendication 1 ou 2, caractérisé en ce que la conduite à niveau libre (1) est formée dans la région des bobines inférieures (2b) et des électrodes (3a, 3b; 3a′, 3b′) par un élément profilé (28) en un matériau magnétique non conducteur muni sur son côté interne d'une couche électriquement isolante (30), matériau dans lequel sont incorporées les électrodes (3a, 3b; 3a′, 3b′).
